# EUROPEAN PATENT APPLICATION

(11) **EP 4 814 447 A1**
(43) Date of publication of application: **30.09.2026**
(21) Application number: 25166211.0
(22) Date of filing: 26.03.2025
(51) Int. Cl.: G01F 23/292, G01N 35/10, G01N 35/00

(54) **OPTICAL DETECTION OF SUFFICIENT SAMPLE ADDITION TO CARTRIDGE**

(71) Applicant: Siemens Healthineers Nederland B.V., 2595 BN Den Haag (NL)
(72) Inventor: van Reenen, Alexander, 5262ML Vught (NL)
(74) Representative: Siemens Healthineers Patent Attorneys

(57) **Abstract**

The present invention is in the field of Point of Care (POC) diagnostics and relates to a method for determining if the amount of a sample fluid added into a sample collecting point of a cartridge is sufficient for the subsequent analysis of the sample fluid and to a device for operating such cartridge, the device comprising an optical sample detector which is capable of detecting at the sample collecting point in the cartridge if the amount of fluid sample applied to the cartridge is sufficient. Further envisaged is a system comprising the device and a cartridge for the uptake and analysis of a fluid sample.

## Description

### TECHNICAL FIELD

The present invention is in the field of Point of Care (POC) diagnostics and relates to a method for determining if the amount of a sample fluid added into a sample collecting point of a cartridge is sufficient for the subsequent analysis of the sample fluid and to a device for operating such cartridge, the device comprising an optical sample detector which is capable of detecting at the sample collecting point in the cartridge if the amount of fluid sample applied to the cartridge is sufficient. Further envisaged is a system comprising the device and a cartridge for the uptake and analysis of a fluid sample.

### BACKGROUND

Point Of Care Testing can provide results to a physician more rapidly than central lab testing. Thus, substituting central lab testing with testing performed at the POC is considered to increase speed and efficiency of diagnostic approaches. For patient safety, proper analytical validation and establishing high-sensitivity performance is critical. Handheld devices which integrate several functions such as sample preparation, analyte detection and signal processing are hence of paramount importance for medical practitioners, particularly, in remote locations without central lab environments. However, the architecture of handheld devices may bring about certain problems. In particular, it is typically difficult for the user to determine if sufficient sample is applied to the system. In addition, for the system to run a test, a minimum sample volume must be applied to enable running. In case insufficient sample is applied to the system, the test routine cannot be performed and the system will report an error message to the user informing the user of the occurrence of the issue. However, in present systems, this error message is not immediate but is provided only after a few minutes. Upon detection of an incorrect filling status the device typically aborts the test, which requires a complete restart of the system and the use of a new cartridge, drastically increasing the costs of operation. There is hence a need for an improved device architecture which avoids the problem and increases analysis efficiency.

### SUMMARY

The present invention addresses this need and provides a method for determining if the amount of a sample fluid added into a sample collecting point of a cartridge is sufficient for the subsequent analysis of the sample fluid and a device for operating a cartridge which device is configured to perform the inventive method.

The device advantageously allows to detect if insufficient sample is applied to the cartridge. If that is the case, the device may provide a warning to the user and thereby aid the user to add more sample to avoid the test to fail. A further advantage is that the detection can be performed almost instantly, i.e. within a few seconds, and thus allows for a correction or modification of the sample filling process, whereas a traditional control mechanism involves detection times of up to several minutes which does not allow for an instant correction and typically leads to the necessity of repeating the test entirely, thus requiring the avoidable consumption of at least one additional cartridge and a certain amount of sample material.

In a first aspect, the present invention relates to a method for determining if the amount of a sample fluid added into a sample collecting point of a cartridge, which cartridge is designed for the analysis of a sample fluid, is sufficient for the subsequent analysis of the sample fluid. The method comprises the steps of
a) illuminating the sample collecting point of the cartridge with light and detecting optical signals from said sample collecting point,
b) measuring said optical signals over time, and
c) evaluating the optical signals measured over time,
wherein steps a) and b) are performed continuously before, during and after addition of the sample fluid into the sample collecting point.

In a preferred embodiment of the method, the evaluation of the optical signals that have been measured over time, i.e. step c), comprises the steps of
i) determining if the intensity of the optical signals measured reaches the level of a predetermined minimum intensity level; and
ii) determining the time period it takes until the intensities of the optical signals measured over time reach a stable level over time and evaluating if said time period is longer than a predetermined maximum time period.

Preferably, the beginning of the time period it takes until the intensities of the optical signals measured over time reach a stable level over time is the time point in which the sample fluid is added into the sample collecting point of the cartridge.

In a preferred embodiment, it is determined that the amount of the sample fluid is not sufficient for the subsequent analysis of the sample fluid,
- if it is determined in step i) that the intensity of the optical signals measured does not reach the level of the predetermined minimum intensity level; and/or
- if it is determined in step ii) that said time period is longer than a predetermined maximum time period.

In a further preferred embodiment, the method further comprises the step of generating an information for a user that the amount of the sample fluid present at the sample collecting point of the cartridge is not sufficient for the subsequent analysis of the sample fluid.

The sample collecting point of the cartridge can be illuminated with green light, preferably having a wavelength in the range of 490-575 nm.

The optical signals detected from the sample collecting point can be, for example, reflected light signals, scattered light signals and/or transmitted light signals.

In a preferred embodiment, the sample collecting point of the cartridge comprises a filter zone comprising a filter membrane.

In another embodiment, the sample fluid added into the sample collecting point of a cartridge is whole blood or plasma.

The inventive method or any embodiment thereof can be performed with the inventive device or the inventive system as described herein.

In a second aspect, the present invention relates to a device for operating a cartridge, which cartridge is designed for the analysis of a sample fluid and has a sample collecting point for the uptake of the sample fluid. The device comprises an optical sample detector and an information processing unit, wherein the optical sample detector comprises a light source and a light sensor. In an operating state of the device, which state comprises said cartridge being inserted into the device, the light source is directed to illuminate the sample collecting point of the cartridge and the light sensor is detecting optical signals from said sample collecting point. The device is configured to perform the inventive method according to the invention as described herein.

In a preferred embodiment, the optical sample detector of the device comprises a light source which emits green light, preferably in a wavelength range of 490-575 nm.

In another embodiment, the optical sample detector of the device is located below the sample collecting point of the cartridge if the cartridge is inserted into the device and the optical signals detected from said sample collecting point are reflected light signals and/or scattered light signals.

In a further preferred embodiment, the device comprises a feedback and/or alert module, which is capable of generating an information for a user that the amount of the sample fluid present at the sample collecting point of the cartridge is not sufficient for the subsequent analysis of the sample fluid.

In a third aspect, the present invention relates to a system which comprises a device according to the invention and as described herein and a cartridge designed for the analysis of a sample fluid and having a sample collecting point for the uptake of the sample fluid.

In a preferred embodiment, the system comprises a cartridge that has a sample collecting point which comprises a filter zone comprising a filter membrane. In a specific embodiment, the filter membrane comprises pores of a diameter of 1.0 to 10 µm, more preferred of 1.6 to 2.8 µm.

In another aspect, the present invention relates to the use of the inventive device or of the inventive system, which are both described herein, for determining if the amount of a sample fluid added into the sample collecting point of a cartridge inserted into the device is sufficient for the subsequent analysis of the sample fluid.

### BRIEF DESCRIPTION OF THE DRAWINGS

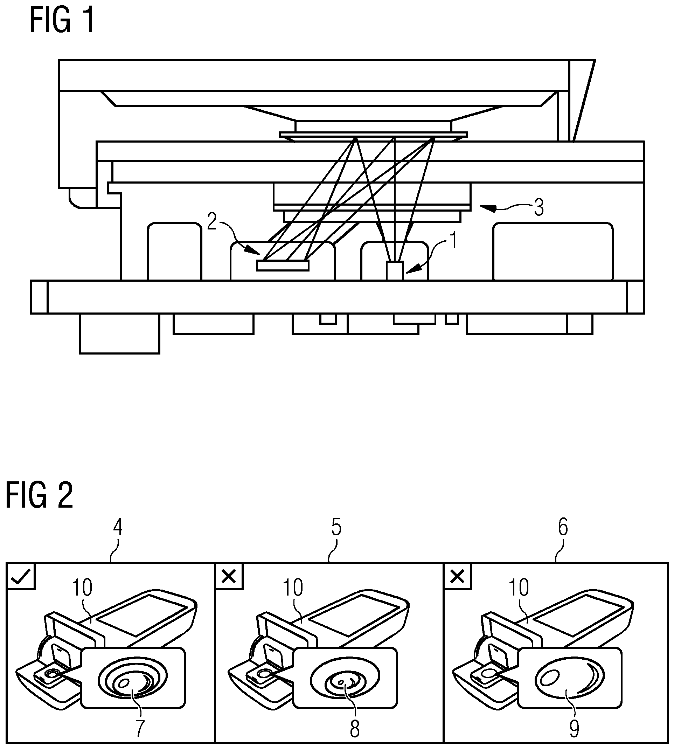

FIG. 1 shows a cross-sectional partial view of a device according to an embodiment of the invention (lower part of figure) with a cartridge (upper part of figure) inserted in a cartridge slot of the device. Depicted are an LED light source (1), a photo detector (2) and a glass window (3).
FIG. 2 shows graphical representations of a cartridge inserted into a device (10) according to an exemplary embodiment of the invention, which indicate the filling status of a sample fluid. Shown are a sufficient filling status (7) in representation (4), an insufficient filling status (8) in representation (5) and an exceeding amount of sample fluid (9) in representation (6).

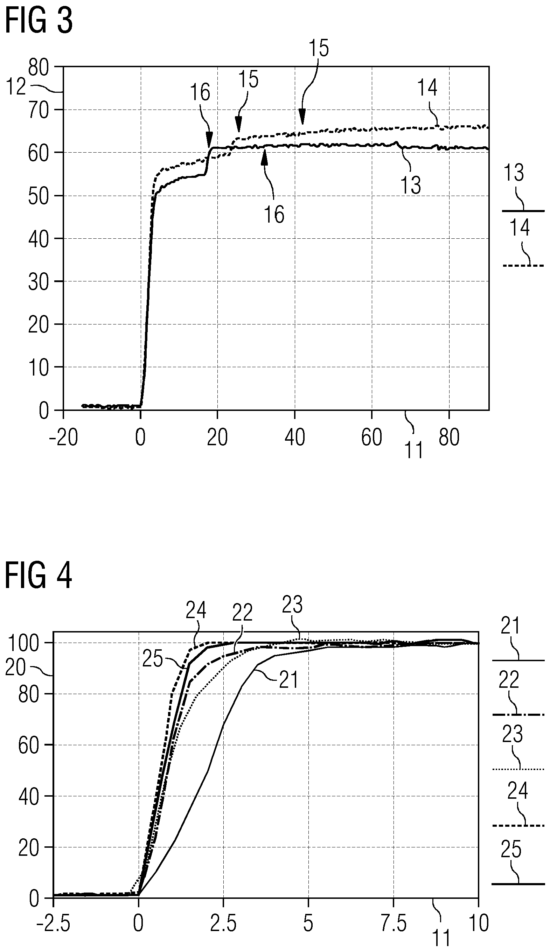

FIG. 3 shows the implementation of an embodiment of the present invention, namely the detection of insufficient sample fluid loading based on extended time duration for the sample detector signal to become stable. On the horizontal axis the time relative to the first sample fluid addition at time point 0 is indicated in seconds (11). On the vertical axis the inverse sample detector signal is indicated in arbitrary units (12). Depicted are the reflected light signals measured for two different samples, a low hematocrit sample (13) which is added in 10 µl steps, and a high hematocrit sample (14) which is added in 10 µl steps. Further shown are the time points in which additional high hematocrit sample volume is added (15) and in which additional low hematocrit sample volume is added (16).
Fig. 4 shows normalized sample fluid volume differences. On the horizontal axis the time relative to sample fluid addition at time point 0 is indicated in seconds (11). On the vertical axis the normalized inversed sample detector signal is indicated in arbitrary units (20). Depicted are the reflected light signals measured for different sample fluid volumes: 10 µl (21), 14 µl (22), 16 µl (23), 20 µl (24) and 25 µl (25).

### DETAILED DESCRIPTION OF EMBODIMENTS

Although the present invention will be described with respect to particular embodiments, this description is not to be construed in a limiting sense.

Before describing in detail exemplary embodiments of the present invention, definitions important for understanding the present invention are given.

As used in this specification and in the appended claims, the singular forms of "a" and "an" also include the respective plurals unless the context clearly dictates otherwise.

In the context of the present invention, the terms "about" and "approximately" denote an interval of accuracy that a person skilled in the art will understand to still ensure the technical effect of the feature in question. The term typically indicates a deviation from the indicated numerical value of ±20 %, preferably ±15 %, more preferably ±10 %, and even more preferably ±5 %.

It is to be understood that the term "comprising" is not limiting. For the purposes of the present invention the term "consisting of" or "essentially consisting of" is considered to be a preferred embodiment of the term "comprising of". If hereinafter a group is defined to comprise at least a certain number of embodiments, this is meant to also encompass a group which preferably consists of these embodiments only.

Furthermore, the terms "(i)", "(ii)", "(iii)" or "(a)", "(b)", "(c)", "(d)", or "first", "second", "third" etc. and the like in the description or in the claims, are used for distinguishing between similar elements and not necessarily for describing a sequential or chronological order.

It is to be understood that the terms so used are interchangeable under appropriate circumstances and that the embodiments of the invention described herein are capable of operation in other sequences than described or illustrated herein. In case the terms relate to steps of a method, procedure or use there is no time or time interval coherence between the steps, i.e. the steps may be carried out simultaneously or there may be time intervals of seconds, minutes, hours, days, weeks etc. between such steps, unless otherwise indicated.

It is to be understood that this invention is not limited to the particular methodology, protocols etc. described herein as these may vary. It is also to be understood that the terminology used herein is for the purpose of describing particular embodiments only and is not intended to limit the scope of the present invention that will be limited only by the appended claims.

The drawings are to be regarded as being schematic representations and elements illustrated in the drawings are not necessarily shown to scale. Rather, the various elements are represented such that their function and general purpose become apparent to a person skilled in the art.

Unless defined otherwise, all technical and scientific terms used herein have the same meanings as commonly understood by one of ordinary skill in the art.

Independent of the grammatical term usage, individuals with male, female or other gender identities are included within the term.

As has been set out above, the present invention relates in one aspect to a device for operating a cartridge, which cartridge is designed for the analysis of a sample fluid and has a sample collecting point for the uptake of the sample fluid.

The term "cartridge designed for the analysis of a sample fluid" as used herein refers to a structure or an instrument, or part of an instrument, or a part of a system, which allows or is suitable for the performance of reactions, in particular biochemical reactions involving chemical and/or biological entities and/or particles and/or the measurement of physical and/or chemical parameters. The cartridge may correspondingly be equipped, for example, with a suitable inlet element; it may comprise one or more surfaces, e.g., reactive surfaces or surfaces with specific functionalities; it may comprise, for example, a washing zone, a mixing zone, a waiting zone, a measurement zone, a waste zone, a reservoir zone, a recollection or a regeneration zone etc. or any sub-portion or combination thereof. In specific embodiments, the cartridge may comprise a filter zone comprising a filter membrane which allows for separating different components of the sample and/or for adding reagents to the sample; it may also comprise a landing zone which allows for delaying the movement of the sample and/or for blending the sample; it may also comprise a transport zone which allows for transporting the sample from the landing zone to a reaction chamber comprising one or more fluidic channels; it may comprise one or more reaction chambers which are designed for the mixing of reagents with the sample and/or to capture analytes from the sample and other reactants; it may comprise a reaction chamber zone which is designed for washing, examination and verification of assay reactions or one or more stop zones where fluidic flow within the cartridge is stopped.

The cartridge may further comprise connections between the mentioned elements, e.g. tubes or joints. It may comprise reservoirs and repositories for liquids, fluids, reactants, chemicals, ingredients, samples or any other entity to be used within the cartridge. The zones may also be equipped with suitable sensor elements allowing the measurement of, e.g., light emission, light reflection, light scattering, light transmission, light interference, temperature changes or temperature gradients.

The cartridge comprises a "sample collecting point". This term relates to a sample receiving interface of the cartridge through which the cartridge can be filled with sample, e.g. by loading a sample fluid volume. Such an interface may, for example, be a point or region of the cartridge, where sample fluid, e.g. blood, is filled into the cartridge and where, at the same time, the sample fluid is pooled or collected before the entering into the analytical zone(s) of the cartridge takes place. The sample collecting point may, for example, be present above a filter or filter zone. An illustration of a sample collecting point is shown in Fig. 2 which depicts different filling status above a filter which works as entry point (and sample collecting point) for the cartridge. The sample collecting point may have different forms and/or dimensions. The sample collecting point may, for example, have a funnel-like shape, or be a surface membrane, or a capillary opening, or a combination of these. Its capacity may vary depending on the form and size of the cartridge, the sample fluid type to be analysed, the amount of sample fluid envisaged for the test etc. In certain embodiments, the sample collecting point may have a capacity to receive an amount of about 15 to 100 µl of a sample fluid, e.g., 15, 20, 25, 30, 35, 40, 45, 50, 55, 60, 65, 70, 80, 85, 90, 95, or 100 µl or any value in between the mentioned values.

It is further preferred that the sample collecting point is designed to be one-hand accessible for the user and accessible for the device for operating the cartridge. It is particularly preferred that the sample collecting point is designed in a way that the device for operating the cartridge does not interfere with the user accessibility. Accordingly, the sample collecting point is designed such that detection of the filling status is enabled while the user is applying the sample fluid. It is particularly preferred that the sample collecting point is designed such that detection of the filling status and the application of a sample fluid volume as well as, if necessary, the additional application of additional sample fluid volume by a user is enabled.

The sample collecting point is typically limited by a filter zone and thus comprises said filter zone. The term "filter zone" as used herein relates to a zone of the cartridge which is designed to separate certain components, e.g., cells or particles, from other components of a sample fluid. The filter zone is typically composed of or comprises a filter membrane. The term "filter membrane" as used herein relates to a selective barrier, mainly performing the function of a separator, e.g., by allowing for a filtering process. The filter membrane may, accordingly, be designed to allow for partial separation of ingredients of fluid samples, for example, of blood. Preferably, the filter membrane may be designed to allow for the passage of liquid portions, proteins or subcellular fragments contained fluid samples, e.g. of plasma derived from a blood sample. It is particularly preferred that the filter membrane is incapable of allowing the passage of cellular entities. For example, the filter may impede the passage of blood cells while allowing the passage of blood plasma.

In specific embodiments, the filter membrane may comprise one or more chemical or biological reagents. These reagents may be provided in a dried form which are dissolved upon contact with the sample fluid. Thereby the chemical or biological reagent may be contacted with the fluid sample or filtration product, e.g., in order to modify the pH, stabilize the sample, induce molecular reactions or the like.

The filter membrane may be composed of any suitable material. Examples include elastic or foldable polymer materials. Particularly preferred is polyurethane. Also envisaged is the use of micromeshes. In preferred embodiments, these micromeshes comprise ultrathin fibers, metallic, ceramic or polymeric materials. In preferred embodiments, the filter membrane comprises pores of a diameter of 1.0 µm to 10.0 µm, more preferred of 1.6 µm to 2.8 µm. For example, the pores may have a diameter of 1.6, 1.7, 1.8, 1.9, 2.0, 2.1, 2.2, 2.3, 2.4, 2.5, 2.6, 2.7 or 2.8 µm or any value in between the mentioned values. Also envisaged are, in certain specific embodiments, larger or smaller pores. The pores provided in one filter membrane may have the same diameter, or they may have two or more different diameters.

In accordance with specific embodiments, the filter membrane may have a thickness of about 100 µm to 2 mm or more.

According to specific embodiments of the present invention, the filter membrane may have any suitable color. It is preferred that the filter membrane has a white color in a dry state. Upon wetting, e.g. by a fluid sample, the color of the filter membrane may change depending on the color of the fluid sample. For example, is a blood sample entered, the color may change from white to red or reddish or a higher obscurity. Accordingly, the optical absorption properties of the filter membrane may change. While a white filter membrane may reflect a higher proportion of light, a red or obscure filter membrane may reflect a lower proportion of light.

The term "device for operating a cartridge" as used herein refers to a device which is designed as reader or control unit. It may, accordingly, for example, provide pneumatic and/or electrical connections to the cartridge for inducing in the cartridge sample movements, reactions with reagents, measurement of parameters etc. Furthermore, the reader or control functionality of the device may additionally comprise sensors or detecting elements allowing to measure values of signals generated in the cartridge. Also, a digital interface, e.g. comprising WiFi and/or Bluetooth and/or WLAN connectivity may be provided within the device. Obtained measurement results may accordingly be transmitted to remote server structures or cloud servers or be transmitted to further local devices such as desktop computer, tablets or the like. In further embodiments, detector elements and assessment units necessary for the detection of the processing state or functioning of the cartridge may be provided by the device. In preferred embodiments, the device is a handheld device.

The device as described above comprises an optical sample detector. The term "optical sample detector" as used herein means a module or unit which is capable of detecting the filling status and/or filling dynamics at the sample collecting point of a cartridge by optical means. In certain embodiments, the optical detection comprises an irradiation with light of the sample collecting point and a detection of light reflected from said sample collecting point. The optical sample detector may accordingly comprise a unit or module with a light source which is designed to provide irradiation with light of the sample collecting point in the cartridge and a unit or module which is designed to detect light reflected from said sample collecting point. According to the invention, the optical sample detector is thus capable of illuminating the sample collecting point of a cartridge with light and detecting optical signals from said sample collecting point. The optical signals are associated with the presence or absence of a sample fluid at the sample collecting point. For example, if no sample fluid is present at the sample collecting point a different signal, e.g. corresponding to the amount of light reflected by the empty sample collecting point, preferably a dry filter membrane at the sample collecting point, is detected in comparison to a situation in which a sample is present at the sample collecting point, e.g. due to wetting of the filter membrane thereby increasing reflection or absorbance due to the optical properties of the sample fluid. These optical signals typically differ and may be associated with different filling situations at the sample collecting point.

The optical sample detector comprises a light source. Particularly preferred is a light source emitting light of certain wavelength ranges such as, for example, green light. Particularly preferred is the emission of light in the wavelength range of 490 to 575 nm because such light is effectively absorbed by a red-colored substance, such as blood.

The light source may be composed of any light generating device. Preferably, the light source is an LED module, more preferably a green light emitting LED. Further envisaged are alternative light sources such as condensed fluorescent light (CFL) sources, incandescent or halogen bulbs or laser diodes.

The optical sample detector further comprises a light sensor which is designed for the detection of light, e.g., reflected, scattered or transmitted light. The light sensor can be a photodiode such as a single-photon avalanche diode (SPAD), a photoconductor, a junction photodetector, or a photomultiplier such as a photomultiplier tube (PMT).

A "photodiode" is a light-sensitive semiconductor diode which converts light into an electric current at a p-n junction or pin junction through an internal photo effect or offers a lighting-dependent resistance. Accordingly, light is converted into an electrical voltage or an electrical current signal to receive information transmitted with light.

Preferred is the use of single-photon avalanche diodes (SPADs). These diodes are typically solid-state photodetectors which are based around a semi-conductor p-n junction that can be illuminated with electromagnetic radiation, inter alia of visible wavelengths. However, in a SPAD, the reverse bias voltage is so high that impact ionization occurs which causes an avalanche current. Thus, a photo-generated carrier is accelerated by the electric field in the device to a kinetic energy which is enough to overcome the ionization energy of the bulk material. A large avalanche of current carriers grows exponentially and can be triggered from as few as a single photon-initiated carrier. A SPAD is able to detect single photons providing short duration trigger pulses that can be counted. It is particularly preferred that the SPAD is provided as an array of SPADs.

In a device according to the invention, the optical sample detector is arranged such that in an operating state of the device which state comprises a cartridge being inserted into the device, the light source is directed to illuminate the sample collecting point of the cartridge and the light sensor is detecting optical signals from said sample collecting point. In one embodiment, the light source is arranged above the sample collecting point and the lights sensor is arranged below the sample collecting point, or vice versa, to allow for the detection of light signals transmitted through the sample collecting point. In this case, the extinction of light will be measured; the more sample fluid is present in the sample collecting point, the more light will be absorbed and not transmitted. In another, more preferred embodiment, the light source and the lights sensor are arranged below the sample collecting point to allow for the detection of light signals reflected and/or scattered by the sample collecting point. In this case, the reflection or scattering of light will be measured; the more sample fluid is present in the sample collecting point, the more light will be absorbed and not reflected or scattered.

For example, in a specific embodiment, in case no sample fluid is applied, a white coloring at the sample collecting point, e.g. at the filter, and its material properties such as a smooth reflective surface may cause most of the light to be reflected, causing a high signal in the light sensor. Further, when a sample fluid, as, for example, a blood sample, is applied, the filter may change its color to red, which in turn may cause the illumination light to be absorbed which reduces the reflected light and thereby the optical signal or light detected. In further specific embodiments, only a fraction of the sample collecting point may be filled with the sample fluid because a relatively small amount of sample fluid is applied to the cartridge. This may lead to changed optical signals. Applying more sample fluid will in general cause less light to be detected by the light sensor.

In specific embodiments, the device as defined herein may comprise a feedback and/or alert module, which is capable of generating an information for a user that the amount of the sample fluid present at the sample collecting point of the cartridge is not sufficient for the subsequent analysis of the sample fluid. The feedback and/or alert module may, for example, be designed to produce an acoustic and/or optical warning, e.g. a sound or an alert signal or a blinking symbol etc. Also envisaged is a feedback and/or alert module which provides a flag symbol in a display of the device.

The device according to the invention further comprises an information processing unit. The information processing unit typically receives, stores, retrieves, transforms, generates, and transmits information as part of the functioning of the device. The information processing unit can be a computing unit that comprises hardware and software elements. The device according to the invention is configured to perform different activities by being operated by accordingly programmed software. In particular, a device according to the invention is configured to perform a method for determining if the amount of a sample fluid added into a sample collecting point of a cartridge is sufficient for the subsequent analysis of the sample fluid as described herein.

The method for determining if the amount of a sample fluid added into a sample collecting point of a cartridge, which cartridge is designed for the analysis of a sample fluid, is sufficient for the subsequent analysis of the sample fluid comprises the steps of
a) illuminating the sample collecting point of the cartridge with light and detecting optical signals from said sample collecting point,
b) measuring said optical signals over time, and
c) evaluating the optical signals measured over time,
wherein steps a) and b) are performed continuously before, during and after addition of the sample fluid into the sample collecting point.

This allows to monitor any change in the filling status of the sample collecting point and provides for the instant determination of a filling status which correlates to an amount of a sample fluid in the sample collecting point which is sufficient for the subsequent analysis of the sample fluid.

The illumination and the detection of optical signals in step a) may, for example, be performed as described herein in the context of the optical sample detector and its components. For example, the illumination may be performed by using a light of certain wavelength ranges such as, for example, green light. Particularly preferred is the use of light in the wavelength range of 490 to 575 nm. The detection of transmitted, reflected or scattered light may be performed as described herein in the context of the optical sample detector. For example, light reflected from the sample collecting point may be detected by using a photodiode as described herein.

The detection of optical signals in step a) may be performed continuously or stepwise with the detection of an optical signal every 0.1, 0.2, 0.3, 0.4, 0.5, 0.6, 0.7, 0.8, 0.9, 1, 1.1, 1.5, 2, 3, 4, 5, 6, 7, 8, 9, or 10 seconds or any value in between the mentioned values. The correspondingly obtained optical signals are associated to time points. The time points can mathematically be connected and analysed, e.g. in order to provide a signal curve or to show signal curve changes. Measured signals may be compared with reference signals which are, e.g. derivable from a data repository and which have been obtained under similar conditions previously.

The illumination and the detection of optical signals in step a) is started prior to the addition of a sample fluid into the sample collecting point of the cartridge and continues during the time point of addition of the sample fluid (t₀) and until a time point after the addition of the sample fluid (tₓ). The illumination and the detection of optical signals may be started at any suitable time point, e.g., at the moment of or after the insertion of the cartridge into the device. The illumination and the detection of optical signals of the empty sample collecting point, i.e. before any sample fluid is added, can continue for any time period, such as, for example, a time period of 1 second to 15 minutes. However, a time period of a few seconds, such as 1, 2, 3, 4, 5, 6, 7, 10, 11, 12, 13, 14, 15, 16, 17, 18, 19, 20, 21, 22, 23, 24, 25, 26, 27, 28, 29, 30, 35, 40, 45, 50, 55, or 60 seconds or any value in between the mentioned values is sufficient to collect optical data which correlate to the empty sample collecting point. The illumination and the detection of optical signals of the sample collecting point continues for another time period which starts at the time point in which a sample fluid is added into the sample collecting point. The illumination and the detection of optical signals of the sample collecting point filled with sample fluid can continue for any time period, such as, for example, a time period of 1 second to 15 minutes. However, a time period of a few seconds, such as 5, 6, 7, 10, 11, 12, 13, 14, 15, 16, 17, 18, 19, 20, 21, 22, 23, 24, 25, 26, 27, 28, 29, 30, 35, 40, 45, 50, 55, 60, 70 or 80 seconds or any value in between the mentioned values is sufficient to collect enough optical data which correlate to the filling status of the sample collecting point and allow the evaluation of the optical signals measured over time to finally determine if the amount of the sample fluid present in the sample collecting point of the cartridge is sufficient for the subsequent analysis of the sample fluid or not.

The optical signals detected from the sample collecting point over time are, in a subsequent step, evaluated in order to determine if the amount of the sample fluid present in the sample collecting point of the cartridge is sufficient for the subsequent analysis of the sample fluid or not.

The step of evaluating the optical signals measured over time can comprise any evaluation method that allows to determine if the amount of a sample fluid added into the sample collecting point of a cartridge is sufficient for the subsequent analysis of the sample fluid or not.

In a preferred embodiment of the method described herein, the evaluation of the optical signals measured continuously before, during and after the addition of the sample fluid into the sample collecting point, i.e. step c), comprises the steps of
i) determining if the intensity of the optical signals measured reaches the level of a predetermined minimum intensity level; and
ii) determining the time period it takes until the intensities of the optical signals measured over time reach a stable level over time and evaluating if said time period is longer than a predetermined maximum time period.

The term "intensity of an optical signal" means the absolute strength or value of an optical signal. In case of optical signals derived from the measurement of transmitted, reflected or scattered light, the intensity of the optical signals measured during the filling process decreases over time because the sample fluid added to the sample collecting point spreads within the sample collecting point and will absorb increasing portions of the light.

The intensity of the optical signals measured is compared with a predetermined minimum intensity level. The term "predetermined minimum intensity level" relates to an absolute value of an optical signal which serves as a threshold to differentiate between optical signal intensities that correspond to sample fluid amounts that are sufficient for the subsequent analysis of the sample fluid on the one hand and optical signal intensities that correspond to sample fluid amounts are not sufficient for the subsequent analysis of the sample fluid on the other hand. Such threshold value is typically specific for a specific combination of device, cartridge, type of sample fluid or the like and needs to be determined in previous experimentation by measuring the optical signals for a plurality of sample fluid amounts that are sufficient for the subsequent analysis of the sample fluid and for a plurality of sample fluid amounts that are not sufficient for the subsequent analysis of the sample fluid.

A preferred minimum intensity level which needs to be reached to determine that the amount of a sample fluid added into the sample collecting point of a cartridge is sufficient for the subsequent analysis of the sample fluid corresponds to an optical signal that has an intensity of 20 % or less of the optical signal measured prior to the addition of any sample.

The time period it takes until the intensities of the optical signals measured over time reach a stable level over time in step ii) can be determined as follows:
The beginning of the time period it takes until the intensities of the optical signals measured over time reach a stable level over time is typically the time point in which the sample fluid is added into the sample collecting point of the cartridge. Said beginning of the time period is the time point at which a first signal intensity change of 0.2% to 20%, or better of 0.5% to 10%, or even more better of between 1% and 5% is detected.

The end of the time period it takes until the intensities of the optical signals measured over time reach a stable level over time is a time point after the sample fluid has been added into the sample collecting point of the cartridge and when the sample has stopped spreading in the sample collecting point. Said end of the time period is a time point in which the intensities of the optical signals measured over time reach a stable level over time.

The determination of reaching a stable level can be achieved by comparing intensity changes in a continuous sequence of optical signals. For example, when applying a sampling rate for measurements of 2 Hz, the optical signals are determined to be stable if the difference between two subsequently measured signals is less than 0.5% or 1% or 2% or 5% or 10%. An alternative is to not only compare two subsequent signals, but to consider more than two subsequent signals to determine stability of the signal, such as a sequence of 3, 4, 5, 6, 7, 8, 9, 10 or more signals, for which between each subsequent signal the intensity change is less than 0.5% or 1% or 2% or 5% or 10%. Alternatively, the average value of a plurality of intensity changes in a continuous sequence of optical signals is less than 0.5%, 1%, 2% or 5%. As an alternative, a more complex decision algorithm can be used to establish that the signal is stable. Exemplary signal curves showing such stable signal values are shown in Fig. 3 and 4.

Typically, the time point of the optical signal which is the first in a sequence of optical signals which has been determined to have reached a stable level defines the end of the time period it takes until the intensities of the optical signals measured over time reach a stable level over time.

Then, it is evaluated if said time period is longer than a predetermined maximum time period. Said predetermined maximum time period relates to a period of time (preferably in seconds) which serves as a threshold to differentiate between time periods that correspond to sample fluid amounts that are sufficient for the subsequent analysis of the sample fluid on the one hand and time periods that correspond to sample fluid amounts are not sufficient for the subsequent analysis of the sample fluid on the other hand. Such threshold value is typically specific for a specific combination of device, cartridge, type of sample fluid or the like and needs to be determined in previous experimentation by measuring said time period for a plurality of sample fluid amounts that are sufficient for the subsequent analysis of the sample fluid and for a plurality of sample fluid amounts that are not sufficient for the subsequent analysis of the sample fluid.

Finally, in the described embodiment, it is determined that the amount of the sample fluid is not sufficient for the subsequent analysis of the sample fluid,
- if it is determined in step i) that the intensity of the optical signals measured does not reach the level of the predetermined minimum intensity level; and/or
- if it is determined in step ii) that said time period is longer than a predetermined maximum time period.

Any predetermined values, ranges, time periods, signal intensities etc. used as a reference in the inventive method can either be stored in the device, preferably in the information processing unit of the device, or be derivable from remote information storing units.

A preferred embodiment of the method described herein further comprises the step of generating an information for a user that the amount of the sample fluid present at the sample collecting point of the cartridge is not sufficient for the subsequent analysis of the sample fluid. It is the most advantageous effect of the present invention that it allows to provide such information very quickly, shortly after the application of the sample fluid to the sample collecting point of the cartridge. Typically, it will be possible to generate the information within 20 seconds after the start of sample application to the sample collecting point. In some cases, the information may be even generated within 10 or less seconds.

The alerting may be performed by an acoustic or optical warning, e.g. a sound production or the generation of an alert signal or a blinking symbol etc. Also envisaged is an alerting step in a software component or an alert which stops the performance of the device. The alerting may further be associated by blocking further analysis steps in the device or cartridge until the detected problem has been solved, e.g. by filling in additional volume of sample fluid to the sample collecting point.

In a further aspect, the present invention relates to a system comprising the device as described herein and a cartridge designed for the analysis of a sample fluid and having a sample collecting point for the uptake of the sample fluid as described herein. Both elements of the system, i.e. the device, such as a handheld device, and the cartridge, may be connected in a push fit fashion, e.g. as cradle and plug-in module. The device, e.g. handheld device, may accordingly be provided with opening or receptacle structures allowing the connection or introduction of a cartridge. The physical separation of both elements of the system according to the present invention provides the advantage that the same device may be used for multiple analyses, while the cartridge may comprise disposable, non-reusable or non-expensive elements such as chemical reactants or assay components etc. A cartridge for use with the present invention is typically a single use or disposable product.

The term "sample fluid" as used herein relates to any inorganic liquid sample or organic liquid sample. Preferably, the sample fluid is a biological sample. The term "biological sample" as used herein refers to any specimen obtained from a biological organism, preferably a living organism. The term relates also to specimen obtained from non-living, i.e. dead biological organisms, in particular recently deceased organisms. The term "biological organism" includes in general eukaryotic systems. In preferred embodiments of the present invention, a biological sample may be derived from an animal, preferably from a mammal, e.g. from a cat, a dog, a swine, a horse, a cattle, a camel, a sheep, a goat, a rabbit, a rat, a mouse, a monkey. Particularly preferred is a sample obtained from a human being. The sample may be obtained via suitable methods known to the person skilled in the art. The sample used in the context of the present invention should preferably be collected in a clinically acceptable manner, more preferably in a way that nucleic acids (in particular RNA) or proteins are preserved.

The sample fluid can be a body fluid, such as blood, sweat, sputum, saliva, semen and urine etc. Particularly preferred are body fluid samples such as whole blood, blood plasma, sputum and urine. The sample fluid can be diluted, e.g., with water or buffer(s), or undiluted.

In certain embodiments, the sample may be a quality control sample or a calibration sample. These samples may comprise a predefined or known content, e.g. a predefined or known concentration, of ingredients or analytes etc.

In further embodiments, the present invention relates to the use of the device as defined herein or the system as defined herein for molecular diagnosis, biological sample analysis, preferably blood sample analysis, pharmacology, biological or chemical sample analysis, food analysis, environmental, veterinarian or forensic analysis. The diagnostic or analytical procedures may comprise, in certain embodiments, the provision of the analytical conclusion or results in a corresponding report. Such a report may be provided in any suitable manner or form, e.g. as electronic file, as electronic file distributed or accessible over the internet, e.g. provided in a cloud or deposited on a server, or web-based, e.g. provided on a suitable website. Alternatively, the report may be provided in paper form. The report may be provided and thus drafted in a corresponding form, to a subject or another person associated with the subject, a scientist or group of scientists, a judicial authority, a hospital or clinic, a medical practitioner, or a government office (including information relevant for these entities). The report may accordingly be redacted, modified, extended or adjusted to the above specified recipient.

### EXAMPLES

### EXAMPLE 1

### Detection of insufficient sample fluid

To investigate the detection of insufficient sample fluid added to a cartridge, a handheld analyzer with an optical sample detector as shown in Fig. 1 and configured to continuously record optical signals, with a frequency of 2 Hz was used. Tests were done with two whole blood samples with a hematocrit (HT) of 37% and 48%, respectively.

Atellica VTLi High sensitivity cardiac troponin I (hs-cTnI) cartridges (Siemens Healthineers) were used for testing.

### 1. Effect of multiple sample applications for different hematocrit

In a first experiment, sample fluid was added to the cartridge by repeatedly adding 10 µL volumes, roughly every 10 seconds. This was done for the high and for the low hematocrit samples. As shown in Fig. 3, multiple additions are clearly visible in the detector signal, and adding more sample volume raises the plateau in signal that is reached. The height of the plateau is different for the different samples, and not necessarily related to the hematocrit (see Fig. 3).

### 2. Effect of sample fluid volume

The effect of applying different volumes of sample fluid was investigated. As a benchmark, for this system, typically a volume of 30 µL is prescribed to be sufficient.

The high hematocrit sample was used for testing, as this sample is the most likely to result in too slow filling / insufficient sample, since a high hematocrit generally results in more volume to be retained in the filter.

In this experiment, the sample volumes tested were 10 µL, 14 µL, 16 µL, 20 µL, and 25 µL. It was observed that for 25 µL the cartridge filled, whereas for 20 and 16 µL no filling was observed after 3 minutes.

It is observed that for lower sample volumes, the duration to reach the plateau signal becomes longer. Possibly, this is due to the spreading of the sample over the filter. The sample spreads out less fast on the filter in case of lower volume, most likely due to the surface tension of the droplet and probably related to the hydrophobicity of the filter surface. This most likely also depends on the exact location where the sample is applied.

### 3. Determining insufficient sample fluid based on duration of sample detector signal to reach plateau

The optical signal profile in the first stages after applying the sample was analysed in further detail. First, the data generated was inversed and normalized to more directly compare the generated curves, see Fig. 4.

Next, the time required to reach 50%, 75%, 90% and 95% of the inverse signal is determined with respect to the signal plateau that is ultimately reached. For sample volumes of 16 µL and less, it was found that the duration is clearly longer as for the higher sample volumes. For 20 µL, which also results in insufficient filling, it was found that the duration is similar as when sufficient sample is applied. A detection in the range of 75% and 90% was identified as optimal.

It could further be shown that, for lower sample volumes, the time is longer as compared to high sample volumes. A method according to embodiments of the invention is considered to allow for an easy implementation as it does not require to store many sampling data points and perform any complex data calculations.

The use of the sample detector functionality of the Atellica VTLi Immunoassay analyzer was investigated to detect the presence of insufficient sample on the sample detector.

### 4. Conclusions

The sample detector enables to detect different amounts of sample being applied to the cartridge, in particular for very low sample volumes. Further the time duration to reach a stable signal after sample addition is longer when insufficient sample is applied and can be used to detect insufficient sample.

Based on these findings, insufficient sample fluid applied may, according to embodiments of the invention, be detected within a few seconds after sample addition, i.e. within 2-5 seconds, instead of the current 3 minutes. Early detection enables, according to further embodiments of the invention, to provide a warning to users to apply more sample to the cartridge.

## Claims

1. A method for determining if the amount of a sample fluid added into a sample collecting point of a cartridge, which cartridge is designed for the analysis of a sample fluid, is sufficient for the subsequent analysis of the sample fluid, the method comprising the steps of
a) illuminating the sample collecting point of the cartridge with light and detecting optical signals from said sample collecting point,
b) measuring said optical signals over time, and
c) evaluating the optical signals measured over time,
wherein steps a) and b) are performed continuously before, during and after addition of the sample fluid into the sample collecting point.

2. The method of claim 1, wherein step c) comprises the steps of
i) determining if the intensity of the optical signals measured reaches the level of a predetermined minimum intensity level; and
ii) determining the time period it takes until the intensities of the optical signals measured over time reach a stable level over time and evaluating if said time period is longer than a predetermined maximum time period.

3. The method of claim 2, wherein the beginning of the time period it takes until the intensities of the optical signals measured over time reach a stable level over time is the time point in which the sample fluid is added into the sample collecting point of the cartridge.

4. The method of any one of claims 2 and 3, wherein it is determined that the amount of the sample fluid is not sufficient for the subsequent analysis of the sample fluid,
• if it is determined in step i) that the intensity of the optical signals measured does not reach the level of the predetermined minimum intensity level; and/or
• if it is determined in step ii) that said time period is longer than a predetermined maximum time period.

5. The method of any one of claims 2 to 4, further comprising the step of generating an information for a user that the amount of the sample fluid present at the sample collecting point of the cartridge is not sufficient for the subsequent analysis of the sample fluid.

6. The method of any one of claims 1 to 5, wherein the sample collecting point of the cartridge is illuminated with green light, preferably having a wavelength in the range of 490-575 nm.

7. The method of any one of claims 1 to 6, wherein the optical signals detected from said sample collecting point are reflected light signals, scattered light signals and/or transmitted light signals.

8. The method of any one of claims 1 to 7, wherein the sample collecting point comprises a filter zone comprising a filter membrane.

9. The method of any one of claims 1 to 8, wherein the sample fluid is whole blood or plasma.

10. The method of any one of claims 1 to 9, wherein the method is performed with the device of any one of claims 11 to 15 or the system of any one of claims 16 and 17.

11. A device for operating a cartridge, which cartridge is designed for the analysis of a sample fluid and has a sample collecting point for the uptake of the sample fluid, the device comprising an optical sample detector and an information processing unit, wherein the optical sample detector comprises a light source and a light sensor, wherein, in an operating state of the device, which state comprises said cartridge being inserted into the device, the light source is directed to illuminate the sample collecting point of the cartridge and the light sensor is detecting optical signals from said sample collecting point, **characterized in that** the device is configured to perform the method according to any one of claims 1 to 9.

12. The device of claim 11, wherein the light source emits green light, preferably in a wavelength range of 490-575 nm.

13. The device of any one of claims 11 and 12, wherein the optical sample detector is located below the sample collecting point of the cartridge if the cartridge is inserted into the device and the optical signals detected from said sample collecting point are reflected light signals and/or scattered light signals.

14. The device of any one of claims 11 to 13, further comprising a feedback and/or alert module, which is capable of generating an information for a user that the amount of the sample fluid present at the sample collecting point of the cartridge is not sufficient for the subsequent analysis of the sample fluid.

15. A system comprising the device of any one of claims 11 to 14 and a cartridge designed for the analysis of a sample fluid and having a sample collecting point for the uptake of the sample fluid.

16. The system of claim 15, wherein the cartridge has a sample collecting point which comprises a filter zone comprising a filter membrane.

17. Use of the device of any one of claims 11 to 14 or of the system of any one of claims 15 and 16 for determining if the amount of a sample fluid added into the sample collecting point of a cartridge inserted into the device is sufficient for the subsequent analysis of the sample fluid.
